# EUROPÄISCHE PATENTSCHRIFT

(11) **EP 3 457 027 B1**
(45) Veröffentlichungstag und Bekanntmachung des Hinweises auf die Patenterteilung: **14.12.2022**
(21) Anmeldenummer: 18193588.3
(22) Anmeldetag: 11.09.2018
(51) Int. Cl.: F22B 21/00, F22B 1/28

(54) **DAMPFERZEUGER FÜR EIN DAMPFGARGERÄT, DAMPFGARGERÄT MIT EINEM SOLCHEN DAMPFERZEUGER UND VERFAHREN ZUR DAMPFERZEUGUNG**
STEAM GENERATOR FOR A STEAM COOKING DEVICE, STEAM COOKING DEVICE WITH SUCH A STEAM GENERATOR AND METHOD FOR GENERATING STEAM
GÉNÉRATEUR DE VAPEUR POUR UN APPAREIL DE CUISSON À VAPEUR, APPAREIL DE CUISSON À VAPEUR DOTÉ D'UN TEL GÉNÉRATEUR DE VAPEUR ET PROCÉDÉ DE GÉNÉRATION DE LA VAPEUR

(30) Priorität: 19.09.2017 DE 102017216599
(43) Veröffentlichungstag der Anmeldung: 20.03.2019
(73) Patentinhaber: E.G.O. Elektro-Gerätebau GmbH, 75038 Oberderdingen (DE)
(72) Erfinder: Albert, Tobias, 76703 Kraichtal (DE)
(74) Vertreter: Patentanwälte Ruff, Wilhelm, Beier, Dauster & Partner mbB

(56) Entgegenhaltungen:
- DE-A1-102012 200 289
- DE-A1-102015 111 117
- DE-C1- 10 109 251

## Beschreibung

### Anwendungsgebiet und Stand der Technik

Die Erfindung betrifft einen Dampferzeuger für ein Dampfgargerät, ein solches Dampfgargerät mit einem entsprechenden Dampferzeuger sowie ein Verfahren zur Dampferzeugung mittels eines Dampferzeugers.

Normalerweise wird Dampf aus einem Dampferzeuger in einen Garraum eines Dampfgargeräts eingeführt, um dort Gargut auf bekannte Art und Weise mit Dampf zu garen. Problematisch dabei ist häufig, dass in dem Dampf, der durch Kochen von Wasser erzeugt wird, häufig kleine Wassertröpfchen enthalten sind, was unerwünscht ist. Deswegen ist bei der DE 10 2012 200 289 A1 ein Dampfgargerät mit einem Dampferzeuger versehen, der außerhalb eines Garraums des Geräts angeordnet ist. Zwischen Dampferzeuger und Garraum ist ein sogenannter Zyklonabscheider angeordnet. Dieser Zyklonabscheider ermöglicht eine effektive Wasserabtrennung aus dem von dem Dampferzeuger eingeführten Wasserdampf. Dadurch können deutlich bessere Garergebnisse für die Nahrungsmittel erzielt und störende Wasserablagerungen in dem Garraum vermieden werden. Der Zyklonabscheider weist einen sich spiralig verengenden Zyklonkanal auf, wobei durch das Herumwirbeln des eingeführten Wasserdampfs im Kreis die Wassertröpfchen aus dem Dampf nach außen geschleudert werden, so dass sie abgetrennt werden können.

Aus der DE 101 09 251 C1 ist ein Dampfgargerät mit einem Dampferzeuger bekannt, wobei einem Dampferzeuger mit einem Kessel samt Heizdrähten ein Dampfaustritt nachgeschaltet ist, dem wiederum auf dem Weg zu einem Garraum des Dampfgargeräts ein Wasserabscheider nachgeschaltet ist. Der Wasserabscheider kann einen Zyklon, eine Prallscheibe oder eine Pralldüse aufweisen.

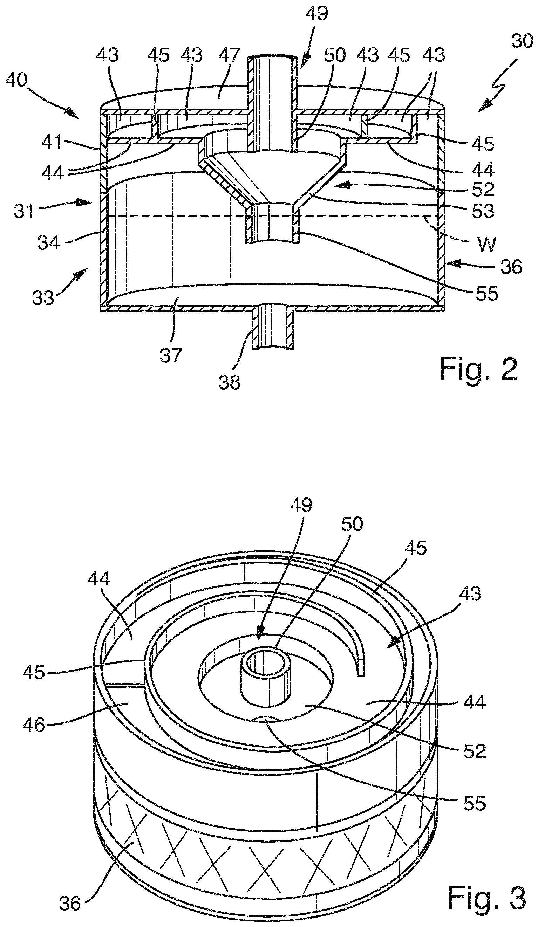

Aus der DE 10 2015 111 117 A1 ist ein Dampferzeuger mit einem Zyklonabscheider in Form eines Fliehkraftabscheiders bekannt, wobei der Zyklonabscheider innerhalb des Dampferzeugers angeordnet ist, und zwar in und entlang einer Verdampfungsstrecke bis zu einem Auslass heraus. Eine konkrete Ausgestaltung des Zyklonabscheiders ist in der Draufsicht aus der Fig. 2 zu erkennen. Es ist dabei zu beachten, dass hier die Dampferzeugungsmittel und der Zyklonabscheider quasi identisch in einem Teil ausgebildet sind, der Dampferzeuger ist als Zyklon ausgebildet.

### AUFGABE UND LÖSUNG

Der Erfindung liegt die Aufgabe zugrunde, einen eingangs genannten Dampferzeuger, ein Dampfgargerät mit einem solchen Dampferzeuger sowie ein Verfahren zur Dampferzeugung zu schaffen, mit denen Probleme des Standes der Technik gelöst werden können und es insbesondere möglich ist, einen vorteilhaften Dampferzeuger zu bauen und gut in ein Dampfgargerät einbauen zu können.

Gelöst wird diese Aufgabe durch einen Dampferzeuger mit den Merkmalen des Anspruchs 1, ein Dampfgargerät mit einem solchen Dampferzeuger mit den Merkmalen des Anspruchs 13 sowie ein Verfahren zur Dampferzeugung mit den Merkmalen des Anspruchs 14. Vorteilhafte sowie bevorzugte Ausgestaltungen der Erfindung sind Gegenstand der weiteren Ansprüche und werden im Folgenden näher erläutert. Dabei werden manche der Merkmale nur für den Dampferzeuger, nur für das Dampfgargerät oder nur für das Verfahren zur Dampferzeugung beschrieben. Sie sollen jedoch unabhängig davon sowohl für den Dampferzeuger als auch für das Dampfgargerät und das Verfahren zur Dampferzeugung selbständig und unabhängig voneinander gelten können. Der Wortlaut der Ansprüche wird durch ausdrückliche Bezugnahme zum Inhalt der Beschreibung gemacht.

Es ist vorgesehen, dass der Dampferzeuger für ein Dampfgargerät, das auf übliche Weise einen Garraum aufweist, Dampferzeugungsmittel sowie eine Wasserzufuhr zu den Dampferzeugungsmitteln aufweist. Des Weiteren ist ein Zyklonabscheider vorgesehen, um den von den Dampferzeugungsmitteln erzeugten Dampf zu behandeln bzw. Wassertröpfchen möglichst abzutrennen. Schließlich führt ein Dampfauslass von dem Zyklonabscheider des Dampferzeugers ab, um zu einem Garraum des Dampfgargeräts zu verlaufen.

Erfindungsgemäß ist vorgesehen, dass der Zyklonabscheider mit den Dampferzeugungsmitteln zusammen eine integrierte Baueinheit bildet, so dass Dampf von den Dampferzeugungsmitteln direkt in den Zyklonabscheider eintritt. Vorteilhaft kann zusätzlich noch ein direkter Austritt von im Zyklonabscheider abgeschiedenem Wasser aus diesem heraus zurück in die Dampferzeugungsmittel vorgesehen sein, insbesondere nur durch eine Leitung oder einen Kanal und ohne Hilfsmittel wie Pumpen odgl.. Zum einen sollte das Wasser aus dem Zyklonabscheider entfernt werden, zumindest nach kurzer Betriebsdauer. Zum anderen kann dieses Wasser eben gut wieder für ein erneutes Verdampfen genutzt werden. Dadurch kann nicht nur Wasser gespart werden, sondern ein Abführen von überflüssigem Wasser kann eingespart werden.

Mit der Erfindung ist es möglich, im Vergleich zu dem vorgenannten Stand der Technik Bauraum in dem Dampfgargerät einzusparen. Des Weiteren kann eine weitere System-Vorfertigung erfolgen, indem in das Dampfgargerät eben nur noch die Baueinheit aus Dampferzeugungsmitteln und Zyklonabscheider eingebaut werden muss und nicht mehr zwei separate Funktionseinheiten mit mehreren Leitungen bzw. Rohren oder Schläuchen dazwischen. Durch die Integration von Dampferzeugungsmitteln und Zyklonabscheider in die Baueinheit kann auch der Weg für den Dampf hin zur Wasserabscheidung verkürzt werden, wodurch der Dampf länger heiß bleibt, was für die Verwendung in dem Garraum von großem Vorteil ist. Ist ein direkter Austritt von abgeschiedenem Wasser aus dem Zyklonabscheider zurück in die Dampferzeugungsmittel vorgesehen, so ist auch dieses aufgrund der funktionalen Integration erheblich einfacher möglich, da eine zweite Leitung nicht benötigt wird. Ein weiterer großer Vorteil der Erfindung ist die Reduzierung von Dichtstellen bzw. die größere Robustheit und bessere Dichtheit aufgrund der Integration in eine Baueinheit im Vergleich zu zwei zuerst separaten und dann miteinander verbundenen Funktionseinheiten, deren Dichtheit bei einer Montage anfälliger ist. Durch die Integration kann auch eine geringere Baugröße der integrierten Baueinheit erreicht werden, deren Raumgewinn deutlich größer ausfällt als nur der Wegfall der im Stand der Technik benötigten Dampfzuleitung und Wasserrückführung.

In Ausgestaltung der Erfindung kann der Zyklonabscheider vorteilhaft auf die Dampferzeugungsmittel aufgesetzt sein. Besonders vorteilhaft ist der Zyklonabscheider dabei direkt über den Dampferzeugungsmitteln aufgesetzt, also in vertikaler Richtung darüber. Dies entspricht einer optimalen Bewegungsrichtung von erzeugtem Dampf von den Dampferzeugungsmitteln in den Zyklonabscheider hinein. Des Weiteren kann so auch möglichst gut abgeschiedenes Wasser aus dem Zyklonabscheider in die Dampferzeugungsmittel zurückgelangen.

In Ausgestaltung der Erfindung können die Dampferzeugungsmittel und der Zyklonabscheider derart ausgebildet sein als Baueinheit, dass sie ein gemeinsames Außengehäuse aufweisen. Dieses gemeinsame Außengehäuse weist den Vorteil auf, dass die Baueinheit leichter handhabbar ist, insbesondere bei der Montage des Dampfgargeräts, und keine mechanisch empfindlichen Stellen aufweist. Ein gemeinsames Außengehäuse kann auch eine gemeinsame mechanische Festigkeit für den Dampferzeuger geben. Dabei ist es möglich, dass das Außengehäuse zweigeteilt ist, also sozusagen aus zwei Gehäuseteilen besteht. Insbesondere kann es einen oberen Gehäuseteil und einen unteren Gehäuseteil aufweisen. Diese sollten vorteilhaft gleich groß bzw. gleichen Durchmesser und/oder gleichen Querschnitt aufweisen, so dass sie relativ nahtlos oder übergangslos aufeinandergesetzt werden können, um das fertige Außengehäuse zu bilden. Die beiden Gehäuseteile können lösbar zusammensetzbar ausgebildet sein oder unlösbar verbunden werden, beispielsweise durch Kleben oder Schweißen.

In weiterer möglicher Ausgestaltung der Erfindung kann vorgesehen sein, dass das untere Gehäuseteil den Dampferzeuger enthält, vorteilhaft natürlich den einzigen Dampferzeuger. Das obere Gehäuseteil kann entsprechend einen Zyklonabscheider aufweisen bzw. besonders vorteilhaft den einzigen Zyklonabscheider. So können diese Gehäuseteile auch funktionale Aufgaben der beiden Funktionseinheiten Dampferzeuger und Zyklonabscheider aufweisen oder bilden. Des Weiteren können die beiden Gehäuseteile auch aus unterschiedlichen Materialien bestehen, so dass sie funktional optimal angepasst sind.

In vorteilhafter Ausgestaltung der Erfindung weisen die Dampferzeugungsmittel ein rohrartiges Teil oder Gehäuse auf, das eine Dampferzeugungskammer bildet. Besonders vorteilhaft ist das rohrartige Gehäuse rund bzw. sogar kreisrund. So kann es leicht hergestellt werden und es sind keine Ecken oder Kanten vorhanden, die schwer erreichbar sind zum Reinigen bzw. in denen sich Verschmutzungen besonders gut halten können. Ein solches rohrartiges Gehäuse sollte vorteilhaft aufrecht stehend angeordnet sein beim Dampferzeuger bzw. eine vertikale Mittellängsachse aufweisen. Eine so gebildete Dampferzeugungskammer weist besonders vorteilhaft eine außenliegende Beheizung auf, die keiner Verkalkungsgefahr unterliegt und somit auch keine elektrisch leitenden Teile oder Bereiche innerhalb der Dampferzeugungskammer und somit potenziell innerhalb des Wassers liegen. Eine derartige außenliegende Beheizung ist beispielsweise von beheizten Wasserpumpen bekannt oder auch von anderen Dampferzeugern, siehe beispielsweise die WO 2008/151798 A2.

Ein derartiges rohrartiges Gehäuse kann vorteilhaft aus Metall bestehen, so dass auf seine Außenseite sehr gut die genannte Beheizung aufgebracht werden kann, beispielsweise mit aus dem Stand der Technik bekannten Dickschicht-Heizelementen. Dieses Gehäuse kann unter Umständen auch ein vorgenanntes unteres Gehäuseteil des gemeinsamen Außengehäuses sein, welches zuvor erläutert worden ist. Alternativ kann die außenliegende Beheizung auch noch einmal von einer Abdeckung überdeckt werden, um sie vor Beschädigungen zu schützen und zur elektrischen Isolation. Eine solche Abdeckung kann dann ggf. auch einen Teil eines vorgenannten Außengehäuses bilden, beispielsweise eben mit dem Zyklonabscheider als oberen Bereich bzw. Gehäuseteil des Außengehäuses. Auf alle Fälle ist es aber bedeutsam, dass der Zyklonabscheider und die Dampferzeugungsmittel bzw. die Dampferzeugungskammer dicht miteinander verbunden sind, so dass zum einen kein Dampf entweicht und dabei verloren geht und zum anderen keine Gefahr elektrischer Isolationsprobleme besteht.

Bei der Dampferzeugungskammer kann vorgesehen sein, dass sie einen Kammerboden aufweist. Des Weiteren weist sie einen Wasserzulauf und einen Wasserablauf auf, wobei vor allem der Wasserzulauf vorteilhaft derart ausgebildet und angeordnet ist, dass er sich nicht mit dem von den Dampferzeugungsmitteln erzeugten und aufsteigenden Dampf stört. Des Weiteren sollte unter Umständen sogar kontinuierlich Wasser nachgefüllt werden können für einen möglichst guten Betrieb des Dampferzeugers. Zumindest ein Wasserablauf sollte an der tiefsten Stelle des Kammerbodens sein, wofür dieser vorteilhaft nach unten geneigt ist oder zumindest zu dem Wasserablauf hin nach unten verläuft. Wasserzulauf und Wasserablauf können auch mit einer einzigen Öffnung in die Dampferzeugungskammer hinein vorgesehen sein, die dann durch entsprechende Führung von Leitungen außerhalb der Dampferzeugungskammer entweder von hinzufließendem Wasser durchströmt wird als Wasserzugabe oder aus der nach einem Betrieb des Dampferzeugers, wenn kein weiterer Dampf mehr benötigt wird, noch verbliebenes Wasser wieder abgelassen werden kann. Je weniger Öffnungen in die Dampferzeugungskammer hinein vorgesehen sind, desto weniger müssen abgedichtet werden bzw. können problematisch werden. Ein Wasserablauf bzw. eine vorgenannte einzige Öffnung kann vorteilhaft in etwa mittig im Kammerboden vorgesehen sein, der vorteilhaft vertieft ist zur Mitte hin. Die Dampferzeugungskammer ist bevorzugt als Rohrabschnitt ausgebildet mit kreisrundem Querschnitt und gerade abgeschnittenen Enden. So kann sie möglichst gut hergestellt und abgedichtet bzw. in die Baueinheit des Dampferzeugers eingebaut werden.

Während also die Dampferzeugungsmittel vorteilhaft aus Metall bestehen können oder zumindest ein rohrartiges Gehäuse aus Metall aufweisen können, besteht der Zyklonabscheider vorteilhaft aus Kunststoff. So kann er relativ leicht hergestellt werden und ist vielfältig formbar, insbesondere um die Zyklonform zu erreichen. Für eine leichtere Montage des Dampferzeugers kann der Zyklonabscheider einteilig sein, wobei er dazu besonders vorteilhaft aus mindestens zwei Teilen zusammengesetzt sein kann. Dazu können diese Teile unlösbar miteinander verbunden sein, beispielsweise verklebt werden. Die Herstellung mittels Kunststoffspritzguss ist zwar auch für sehr komplizierte Teile möglich, ist aber erheblich kostengünstiger, wenn diese Teile weniger kompliziert ausgebildet sind und es dafür mehrere Teile sind, die dann miteinander verbunden werden können.

Ein Dampfauslass aus dem Zyklonabscheider ist vorteilhaft mittig bzw. zentral angeordnet, wobei er nach oben verläuft, besonders vorteilhaft direkt vertikal nach oben, insbesondere auch im Einbauzustand in einem Dampfgargerät. So kann der Dampf optimal von alleine aus dem Zyklonabscheider herausströmen, wenn Wassertröpfchen abgeschieden sind. Ein solcher Dampfauslass kann dabei entlang einer Mittellängsachse des Zyklonabscheiders und/oder der Dampferzeugungsmittel verlaufen.

Erfindungsgemäß weist ein Zyklonabscheider einen zumindest abschnittsweise bogenförmig verlaufenden Zyklonkanal auf, in dem der Wasserdampf in einerseits möglichst reinen Dampf und andererseits in Wasser bzw. Wassertröpfchen getrennt wird, so dass Wassertröpfchen abgeschieden werden. Der Zyklonabscheider weist mindestens einen Wasserdampfeinlass auf, um Wasserdampf von den darunter oder daran angeordneten Dampferzeugungsmitteln in den Zyklonabscheider bzw. in den Zyklonkanal einzuleiten. Dieser Wasserdampfeinlass weist vorteilhaft eine relativ große Fläche auf im Vergleich zu dem Querschnitt des vorgenannten Dampfauslasses. Dieser Dampfauslass wiederum ist am Endbereich des Zyklonkanals vorgesehen. Ein Wasserauslass aus dem Zyklonabscheider bzw. aus dem Zyklonkanal ist dazu vorgesehen, um aus dem Wasserdampf abgeschiedenes Wasser wieder auszulassen, bevorzugt nachdem es gesammelt wurde. Erfindungsgemäß wird das Wasser nach unten in die Dampferzeugungskammer der Dampferzeugungsmittel geleitet bzw. läuft selbsttätig dort hinein. Der Zyklonkanal weist erfindungsgemäß an einem nahe dem Wasserdampfeinlass befindlichen Anfangsbereich eine Querschnittsverringerung auf. Damit kann eine Strömung von Wasserdampf, gerade auch kurz nach Eintritt in den Zyklonkanal, verbessert werden, beispielsweise kann hier ein erstes Abscheiden von Wassertröpfchen erfolgen, die dann direkt nach unten in die Dampferzeugungsmittel bzw. deren Dampferzeugungskammer fallen oder fließen können.

Der Zyklonkanal weist erfindungsgemäß einen Zyklonboden auf, der in einem radial äußeren Bereich des Zyklonkanals in einer Ebene verläuft. Dieser radial äußere Bereich ist beispielsweise außerhalb von 50 % des Radius des Zyklonabscheiders. Dabei ist vorgesehen, dass eine Zyklonseitenwand, die vorteilhaft auf dem Zyklonboden aufliegt, spiralig verläuft und sich dabei verengt. Eine solche Verengung ist vorteilhaft kontinuierlich, wobei sie nicht zwingend gleichmäßig sein muss. Durch ein solches Verengen kann der entlangströmende Wasserdampf noch einmal geringfügig komprimiert und/oder beschleunigt werden, wodurch aufgrund des spiraligen Umlaufens kleine Wassertröpfchen herausgeschleudert bzw. abgeschieden werden können und sich am Zyklonboden sammeln.

In einem radial inneren Bereich des Zyklonabscheiders ist erfindungsgemäß eine Kanalvertiefung vorgesehen, die unterhalb der Ebene des Zyklonbodens im radial äußeren Bereich des Zyklonkanals reicht. Die Höhe der Kanalvertiefung kann beispielsweise mehr als das Doppelte der Höhe des Zyklonkanals im radial äußeren Bereich betragen, wobei die Kanalvertiefung vorteilhaft nur nach unten bzw. unterhalb die Ebene des Zyklonbodens verläuft. Nach oben kann dieselbe Begrenzungsebene wie für einen radial äußeren Bereich des Zyklonkanals vorgesehen sein. In dieser Kanalvertiefung kann sich aus dem Wasserdampf abgeschiedenes Wasser sammeln und nach unten zurück in die Dampferzeugungsmittel fließen bzw. abgeführt werden. Die Kanalvertiefung kann so ausgebildet sein, dass sie eine Stufe aufweist bzw. nichtkontinuierlich ausgebildet ist. So kann ein besseres Ablaufen von Wasser erreicht werden. Die Kanalvertiefung kann vorteilhaft rund oder sogar kreisrund ausgebildet sein.

In einer vorteilhaften Ausgestaltung der Erfindung ist die Kanalvertiefung zumindest teilweise konisch bzw. weist zumindest teilweise Trichterform auf, beispielsweise als Trichter mit geradem oberem Rand. Sie kann um eine Mittelachse des Zyklonabscheiders herum angeordnet sein, vorzugsweise radialsymmetrisch um eine solche Mittelachse.

Von einer tiefsten Stelle der Kanalvertiefung kann der vorgenannte Wasserauslass nach unten abgehen. Insbesondere ist dieser Wasserauslass zentrisch zur Mittelachse der Kanalvertiefung bzw. des Zyklonabscheiders. Von dieser tiefsten Stelle aus kann das Wasser besonders gut ablaufen. Ein Wasserauslass kann die Form eines kurzen Rohrs oder einer kurzen Leitung aufweisen. Der Wasserauslass kann und sollte unterhalb einer Ebene liegen, in der sich eine Oberkante der Beheizung der Dampferzeugungsmittel befindet. So kann erreicht werden, dass in den Dampferzeugungsmitteln bzw. in der Dampferzeugungskammer stets der Wasserstand in etwa am Oberrand der Beheizung liegt, so dass diese vor Überhitzung geschützt ist und das Wasser innerhalb der Dampferzeugungskammer stets genügend Wärme von der Beheizung abnimmt. Somit sollte ein Wasserstand immer bis hier gehen, und damit endet der Wasserauslass des Zyklonabscheiders im Wasser. Dadurch kann hier kein Dampf aus den Dampferzeugungsmitteln entweichen was störend wäre.

Die Kanalvertiefung kann auch noch die wichtige Aufgabe aufweisen, dass sie zumindest teilweise, vorteilhaft vollständig, einen Abscheidebereich bildet, in dem Wasser aus dem Wasserdampf abgeschieden wird. Dazu kann auch vorgesehen sein, dass ein Dampfauslass ein nach unten ragendes Dampfauslassrohr aufweist. Dessen untere Rohröffnung liegt im Bereich der Kanalvertiefung und verläuft vorteilhaft unterhalb der Ebene des Zyklonbodens im radial äußeren Bereich des Zyklonkanals. Dann kann Dampf nicht so leicht aus dem Abscheidebereich entweichen, sondern muss sozusagen von unten eindringen. Dadurch wird das Abscheiden von Wassertröpfchen aus dem Wasserdampf noch verstärkt bzw. verbessert. Es kann vorgesehen sein, dass das Dampfauslassrohr und der Wasserauslass miteinander fluchten bzw. entlang einer gemeinsamen Geraden verlaufen.

Von den Dampferzeugungsmitteln kann Dampf direkt nach oben aufsteigen aus dem kochenden Wasser und in den Zyklonabscheider eintreten, vorteilhaft durch einen Wasserdampfeinlass. Dazu können ggf. auch zwei separate und voneinander beabstandete Wasserdampfeinlässe vorgesehen sein. So kann eben der Dampf in den Zyklonkanal eintreten. Durch das Vorsehen von zwei Wasserdampfeinlässen, die vorteilhaft relativ zu einer Mittelachse des Zyklonabscheiders einander gegenüberliegen, kann mehr Wasserdampf in den Zyklonkanal eintreten. Die beiden Wasserdampfeinlässe können vorteilhaft in ein- und denselben Zyklonkanal hineinführen, so dass einfach insgesamt ein größerer Eintrittsquerschnitt für Wasserdampf in den Zyklonabscheider gegeben ist. Durch die zwei Eintrittsmöglichkeiten für Wasserdampf in den Zyklonkanal kann ggf. das Zirkulieren bzw. Umlaufen des Wasserdampfs im Zyklonabscheider verbessert werden. Alternativ kann ein einziger großer Wasserdampfeinlass vorgesehen sein, der sich mit länglicher Form um mindestens einen halben Umlauf erstrecken kann.

Ein erfindungsgemäßes Dampfgargerät weist mindestens einen vorbeschriebenen Dampferzeuger auf. Der Dampferzeuger ist innerhalb eines Gehäuses des Dampfgargeräts angeordnet. Um Wasser zuzuführen, ist ein Wasserzulauf in die Dampferzeugungsmittel hinein vorgesehen, vorteilhaft versehen mit einer Pumpe zum gewünschten Nachdosieren von Wasser. Dampf wird vom Dampfauslass des Zyklonabscheiders in einen Garraum des Dampfgargeräts geführt, wobei dies an sich erfolgen kann wie aus dem Stand der Technik bekannt. Bevorzugt wird der Dampf an einer Seiten- bzw. einer Rückwand in den Garraum eingelassen. Grundsätzlich könnte ein Dampferzeuger zwar auch im unteren Bereich des Dampfgargeräts bzw. möglicherweise sogar unter dem Garraum angeordnet sein. Dann allerdings sind das Einleiten von Dampf sowie das Verteilen im Garraum möglicherweise erschwert.

Um nun erfindungsgemäß Dampf zu erzeugen für einen Garraum eines Dampfgargeräts wird zuerst Wasser erhitzt, um Wasserdampf zu erzeugen. Dazu kann das Wasser vorteilhaft zum Sieden oder sogar zum sprudelnden Kochen gebracht werden. Direkt oberhalb des erhitzten Wassers wird erzeugter Wasserdampf in einen Zyklonabscheider mit Zyklonkanal überführt bzw. eingeleitet. Dort wird der Wasserdampf innerhalb des Zyklonkanals umlaufend und spiralig nach innen geführt entsprechend dem Verlauf des Zyklonkanals. Dabei wird Wasser aus dem Wasserdampf abgeschieden bzw. herausgeschleudert in Form von kleinen Wassertröpfchen. Dieses Wasser wird aufgefangen, vorteilhaft an einem Zyklonboden des Zyklonkanals, und wieder in die Dampferzeugungsmittel zurückgeführt. Der von den Wassertröpfchen befreite Dampf wird aus dem Zyklonabscheider ausgelassen, um in den Garraum des Dampfgargeräts einzutreten. Über die eingetragene Heizenergie an der Beheizung der Dampferzeugungsmittel kann die Menge an erzeugtem Dampf eingestellt werden. So kann eine Dampferzeugung kontinuierlich oder auch in Intervallen erreicht werden.

Diese und weitere Merkmale gehen außer aus den Ansprüchen auch aus der Beschreibung und den Zeichnungen hervor, wobei die einzelnen Merkmale jeweils für sich allein oder zu mehreren in Form von Unterkombinationen bei einer Ausführungsform der Erfindung und auf anderen Gebieten verwirklicht sein und vorteilhafte sowie für sich schutzfähige Ausführungen darstellen können, für die hier Schutz beansprucht wird. Die Unterteilung der Anmeldung in einzelne Abschnitte sowie Zwischen-Überschriften beschränken die unter diesen gemachten Aussagen nicht in ihrer Allgemeingültigkeit.

### KURZBESCHREIBUNG DER ZEICHNUNGEN

Ausführungsbeispiele der Erfindung sind in den Zeichnungen schematisch dargestellt und werden im Folgenden näher erläutert. In den Zeichnungen zeigen:
- Fig. 1: einen schematischen Aufbau eines erfindungsgemäßen Dampfgargeräts mit einem erfindungsgemäßen Dampferzeuger für einen Garraum,
- Fig. 2: den Dampferzeuger alleine im vertikalen Schnitt,
- Fig. 3: den Dampferzeuger mit abgeschnittenem oberen Deckel in Schrägansicht und
- Fig. 4: den Dampferzeuger aus Fig. 3 in der direkten Draufsicht.

### DETAILLIERTE BESCHREIBUNG DER AUSFÜHRUNGSBEISPIELE

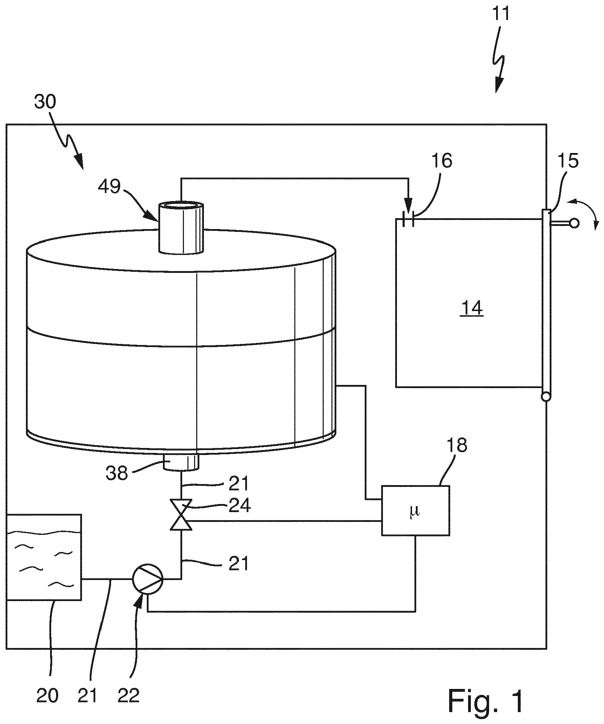

In der Fig. 1 ist ein erfindungsgemäßes Dampfgargerät 11 stark vereinfacht dargestellt mit den für die Erfindung wesentlichen Teilen. Das Dampfgargerät 11 weist ein Gehäuse 12 auf mit einem Garraum 14, der von rechts über eine Tür 15 zugänglich ist. Von oben führt ein Dampfeinlass 16 in den Garraum 14 hinein. Der Dampfeinlass 16 führt zu einem Dampferzeuger 30, der nachfolgend noch näher erläutert wird. Ein Wasserauslass daraus ist möglich, hier aber nicht relevant.

Das Dampfgargerät 11 weist eine Steuerung 18 auf, die den Betrieb des Dampferzeugers 30 bezüglich sowohl einer Beheizung als auch einer Wasserzufuhr steuert. Ein Wassertank 20 ist mittels Wasserleitungen 21 mit dem Dampferzeuger 30 verbunden. Für eine gesteuerte Wasserzufuhr und einen gesteuerten Wasserablauf sind in den Wasserleitungen 21 eine Pumpe 22 und ein Ventil 24 vorgesehen, die mit der Steuerung 18 verbunden sind ebenso wie eine hier nicht näher dargestellte Beheizung des Dampferzeugers 30. Die Pumpe 22 kann von der Steuerung 18 gesteuert Wasser aus dem Wassertank 20 in den Dampferzeuger 30 pumpen, wozu das Ventil 24 geöffnet wird. Während des Verdampfens kann das Ventil 24 zumindest teilweise geschlossen bleiben und nur zum Nachfüllen von Wasser geöffnet werden. Nach einer Dampferzeugung bzw. nach Ende des Betriebs des Dampfgargeräts 11 kann das Ventil 24 von der Steuerung 18 geöffnet werden, so dass restliches Wasser aus dem Dampferzeuger 30 entweder von alleine zurück in den Wassertank 20 zurückfließt oder, falls die Pumpe 22 entsprechend ausgebildet ist, unterstützt von der Pumpe 22 zurückgepumpt wird.

In den Fig. 2 bis 4 ist der erfindungsgemäße Dampferzeuger 30 näher dargestellt. Wie die Fig. 3 zeigt, ist außen ein Heizelement 36 im unteren Bereich aufgebracht. Dieser untere Bereich des Dampferzeugers 30 befindet sich an einer Außenseite seines Gehäuses 31 und ist somit Teil der vorgenannten Dampferzeugungsmittel mit einem unteren Gehäuseteil 34. In den Dampferzeugungsmitteln 33 wird mittels der Beheizung 36 Wasser erhitzt und zum Sieden bzw. Kochen gebracht, so dass Wasserdampf entsteht. Wasser kann über einen Wasserzugang 38 im Boden 37 des Dampferzeugungsmittels 33 zugeführt werden oder auch abgelassen werden. Gestrichelt dargestellt ist mit der Bezeichnung "W" eine Wasserstandslinie für einen üblichen Betrieb des Dampferzeugers 30, so dass die Dampferzeugungsmittel 33 bis in etwa zu dieser Wasserstandslinie W gefüllt sind. Hierfür können beispielsweise Wasserstandssensoren unterschiedlichster Art verwendet werden, auf die hier nicht näher eingegangen werden soll. Dies kann mit Leitfähigkeitssensoren, kapazitiven Sensoren oder auch Temperatursensoren an der Außenseite der Dampferzeugungsmittel 33 erfolgen. Der Fachmann kann diese im Stand der Technik entsprechend finden und hier anwenden bzw. einbauen.

Auf die Dampferzeugungsmittel 33 ist ein Zyklonabscheider 40 aufgesetzt, und zwar direkt aufgesetzt. So kann eine Außenwand eines oberen Gehäuseteils 41 des Zyklonabscheiders 40 Form und Querschnitt des unteren Gehäuseteils 34 direkt fortsetzen. Die beiden Gehäuseteile 34 und 41 können so ein Außengehäuse bilden, wie es eingangs erläutert worden ist. Diese Fortsetzung der Kontur muss nicht zwingend sein, bietet sich aber an für eine gute Dampfführung innerhalb des Dampferzeugers 30 sowie vor allem für das Sicherstellen einer Dichtheit zwischen den beiden Gehäuseteilen. Es kann auch vorgesehen sein, dass über dem unteren Gehäuseteil 34 zum Schutz des Heizelements 36 eine zusätzliche Abdeckung vorgesehen ist, beispielsweise auch um Anschlussstecker odgl. abzudecken.

Eine Verbindung von unterem Gehäuseteil 34 und oberem Gehäuseteil 41 kann auf verschiedene Art und Weise erfolgen. Einerseits kann dies durch Verklebung erfolgen, wobei das untere Gehäuseteil 34 in der Regel einen Mantel aus Metall aufweist und ein Boden 37 möglicherweise aus Kunststoff ist. Der obere Gehäuseteil 41 wird in aller Regel aus Kunststoff hergestellt werden, allein schon wegen der besseren Formbarkeit bzw. Herstellbarkeit. Die beiden Gehäuseteile 34 und 41 können auch zusammengesetzt werden mit einer Dichtung dazwischen, beispielsweise noch zusammengehalten durch Klemmteile odgl..

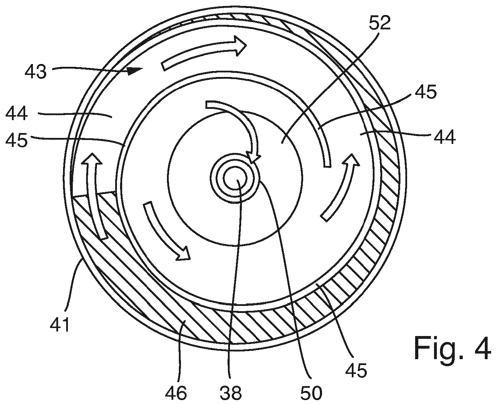

Der Zyklonabscheider 40 mit dem oberen Gehäuseteil 41 weist einen aus den Fig. 2 bis 4 erkennbaren Zyklonkanal 43 auf. Dieser verläuft von oben gesehen im Uhrzeigersinn und wird gebildet zwischen einem Zyklonboden 44, zu dem parallel mit Abstand dazu ein Deckel 47 verläuft. Dazwischen verläuft eine Zyklontrennwand 45 mit der spiraligen Form. Es ist zu erkennen, insbesondere aus Fig. 4 mit der Schraffierung, dass ein Wasserdampfeinlass 46 gebildet ist durch quasi Weglassen des Zyklonbodens 44, und zwar beinahe über einen gesamten Umlauf. Demzufolge weist der Wasserdampfeinlass 46 eine variierende Breite auf bzw. in Strömungsrichtung zunehmend. Der Zyklonkanal 43, der sich daran anschließt, macht ungefähr eineinhalb Umläufe, beginnend dort, wo der Wasserdampfeinlass 46 aufhört und der Zyklonboden 44 beginnt. Der Wasserdampfeinlass 46 gemäß der Draufsicht der Fig. 4 könnte auch zweigeteilt sein, beispielsweise durch einen Steg parallel zum Zyklonboden 44 hin zur Außenwand. So könnte eine bessere Festigkeit erreicht werden.

Oben im Deckel 47 ist ein Dampfauslass 49 vorgesehen, der dann zu dem Dampfeinlass 16 in den Garraum 14 entsprechend Fig. 1 geführt ist. Am Dampfauslass 49 ist ein Dampfauslassrohr 50 vorgesehen, welches nicht nur nach oben über den Deckel 47 übersteht, sondern auch nach unten ragt. Die Fig. 2 zeigt deutlich, dass das Dampfauslassrohr 50 deutlich unterhalb die Ebene des Zyklonbodens 44 reicht. Dies bedeutet, dass eintretender und im Zyklonkanal 43 umlaufender Wasserdampf nicht direkt sozusagen in seitlicher Richtung und nach oben durch den Dampfauslass 49 aus dem Dampferzeuger 30 entweichen kann. Vielmehr muss der Wasserdampf erst einmal etwas nach unten geführt werden, um dann von unten in das Dampfauslassrohr 50 einzutreten.

In diesem Bereich unten ist eine Kanalvertiefung 52 im Zyklonboden 44 vorgesehen. Diese ist, wie die Draufsicht der Fig. 4 zeigt, rundsymmetrisch und weitgehend trichterförmig mit einem geraden Rand oben und einem nach unten an den Trichterabschnitt 53 anschließenden Wasserauslass 55, hier in kurzer Rohrform. Dieser Wasserauslass 55 reicht unter die Wasserstandslinie W, zumindest im normalen Betrieb des Dampferzeugers 30. So wird eben verhindert, dass Wasserdampf direkt nach oben steigen kann und durch den Dampfauslass 49 aus dem Dampferzeuger 30 austreten kann. Der kurze Wasserauslass 55 als Rohr reicht hier also aus, eine Pumpe odgl. ist für die Rückführung des Wassers nicht notwendig.

Wie die Pfeile der Fig. 4 andeuten und wie leicht vorstellbar ist, entsteht Wasserdampf beim Kochen von Wasser im Dampferzeuger 30 unten in den Dampferzeugungsmitteln 33. Dieser Wasserdampf enthält auch kleine Wassertröpfchen, die mitgerissen werden. Der Wasserdampf tritt durch den Wasserdampfeinlass 46 in länglicher Schlitzform nach oben in den Zyklonabscheider 40 bzw. in den Zyklonkanal 43 ein und läuft im Uhrzeigersinn um. Dabei kann möglicherweise durch die Zentrifugalkraft bereits ein Teil der Wassertröpfchen aus dem Dampf nach außen geschleudert werden und sich an den Innenseiten der Zyklontrennwand 45 bzw. auf dem Zyklonboden 44 sammeln. Durch eine mögliche leichte Neigung des Zyklonbodens 44 kann Wasser entweder wieder durch den Wasserdampfeinlass 46 zurück nach unten fließen oder aber hin zur Kanalvertiefung 52 mit dem Wasserauslass 55 fließen. In der Kanalvertiefung 52 wird aufgrund des engeren Radius die Wirkung des Herausschleuderns der Wassertröpfchen noch deutlich verstärkt, wie dies von Zyklonabscheidern bekannt ist und auch aus der eingangs genannten DE 10 2012 200 289 A1 für den Fachmann verständlich ist. Während dann der sozusagen entwässerte Dampf durch das Dampfauslassrohr 50 zum Dampfauslass 49 herausströmt, fließt das Wasser, insbesondere das in der Kanalvertiefung 52 abgeschiedene Wasser, wieder nach unten in die Dampferzeugungsmittel 33 zurück. Somit besteht kein Problem oder Aufwand mit der Rückführung dieses Wassers, des Weiteren kann das Wasser wieder zum Verdampfen genutzt werden. Dies ist also einer der Vorteile des sehr kompakten Dampferzeugers, der als eine integrierte Baueinheit ausgebildet ist. Der weitere Vorteil ist derjenige, dass durch Verbinden der beiden Gehäuseteile 34 und 41 und somit der Dampferzeugungsmittel 33 und des Zyklonabscheiders 40 eine dauerhaft dichte Verbindung hergestellt werden kann, insbesondere eine unlösbare Verbindung. Somit benötigt der erfindungsgemäße Dampferzeuger 30 relativ wenig Platz in dem Dampfgargerät 11, ist sehr leicht einzubauen und sehr betriebssicher.

Eine Herstellung des Zyklonabscheiders 40 bietet sich erkennbar aus Kunststoff an durch Kunststoffspritzguss, so dass eine gewünschte Form erreicht werden kann. Dabei kann der Zyklonabscheider 40 aus zwei Teilen bestehen, so dass beispielsweise der Deckel 47 samt Dampfauslassrohr 50 ein erstes Teil ist und ein zweites Teil den Rest bildet. An diesem Teil, möglicherweise aber auch an demjenigen mit dem Zyklonboden 44, kann der Außenmantel angeformt sein.

## Patentansprüche

1. Dampferzeuger (30) für ein Dampfgargerät (11), wobei das Dampfgargerät (11) einen Garraum (14) aufweist, wobei der Dampferzeuger (30) aufweist:
- Dampferzeugungsmittel (33),
- eine Wasserzufuhr (21) zu den Dampferzeugungsmitteln (33),
- einen Zyklonabscheider (40) für von den Dampferzeugungsmitteln erzeugten Dampf,
- einen Dampfauslass (49) von dem Zyklonabscheider (40) zu dem Garraum (14) des Dampfgargeräts (11),
wobei der Zyklonabscheider (40) aufweist:
- mindestens einen Wasserdampfeinlass (46) zum Einleiten von Wasserdampf von den darunter angeordneten Dampferzeugungsmitteln (33) nach oben in den Zyklonkanal (43) bzw. in den Zyklonabscheider (40),
- den Dampfauslass (49) am Endbereich des Zyklonkanals (43),
- den Wasserauslass (55) aus dem Zyklonabscheider (40) bzw. aus dem Zyklonkanal (43) zum Auslassen von abgeschiedenem Wasser nach unten in die Dampferzeugungskammer der Dampferzeugungsmittel (33),
**dadurch gekennzeichnet, dass** der Zyklonabscheider (40) aufweist:
- einen zumindest abschnittsweise bogenförmig verlaufenden Zyklonkanal (43) zum Trennen von Wasserdampf in einerseits Dampf und andererseits Wasser,
wobei:
- der Zyklonabscheider (40) mit den Dampferzeugungsmitteln (33) eine integrierte Baueinheit bildet mit einem direkten Eintritt von Dampf von den Dampferzeugungsmitteln in den Zyklonabscheider,
- der Zyklonkanal (43) an einem nahe dem Wasserdampfeinlass (46) befindlichen Anfangsbereich eine Querschnittsverringerung aufweist,
- der Zyklonkanal (43) einen Zyklonboden (44) aufweist,
- der Zyklonboden in einem radial äußeren Bereich des Zyklonkanals (43) in einer Ebene verläuft,
- sich eine Zyklonseitenwand spiralig verengt,
- in einem radial inneren Bereich des Zyklonabscheiders (40) eine Kanalvertiefung (52) vorgesehen ist, die unterhalb die Ebene des Zyklonbodens (44) im radial äußeren Bereich des Zyklonkanals (43) reicht.

2. Dampferzeuger nach Anspruch 1, wobei ein direkter Austritt (55) von abgeschiedenem Wasser aus dem Zyklonabscheider (40) in die Dampferzeugungsmittel (33) vorgesehen ist, vorzugsweise einen Austritt (55) in kurzer Rohrform.

3. Dampferzeuger nach Anspruch 1 oder 2, wobei der Zyklonabscheider (40) auf die Dampferzeugungsmittel (33) aufgesetzt ist, wobei vorzugsweise der Zyklonabscheider direkt über den Dampferzeugungsmitteln angeordnet ist in vertikaler Richtung.

4. Dampferzeuger nach einem der vorhergehenden Ansprüche, wobei die Dampferzeugungsmittel (33) und der Zyklonabscheider (40) als Baueinheit ein gemeinsames Außengehäuse aufweisen, wobei vorzugsweise das Außengehäuse mindestens zweigeteilt ist, insbesondere in mindestens einen oberen Gehäuseteil (41) und einen unteren Gehäuseteil (34), wobei vorzugsweise das untere Gehäuseteil (34) die Dampferzeugungsmittel (33) enthält und das obere Gehäuseteil (41) den Zyklonabscheider (40).

5. Dampferzeuger nach einem der vorhergehenden Ansprüche, wobei die Dampferzeugungsmittel (33) ein rohrartiges Gehäuse (34) aufweisen, das eine Dampferzeugungskammer bildet, vorzugsweise mit vertikaler Mittellängsachse, wobei insbesondere die Dampferzeugungskammer eine außenliegende Beheizung (36) aufweist und wobei vorzugsweise das rohrartige Gehäuse (34) der Dampferzeugungsmittel (33) ein unteres Gehäuseteil (34) des gemeinsamen Außengehäuses nach Anspruch 4 ist.

6. Dampferzeuger nach Anspruch 5, wobei im Kammerboden der Dampferzeugungskammer ein Wasserzulauf (38) und ein Wasserablauf vorgesehen ist, vorzugsweise gemeinsam mit einer einzigen Öffnung, wobei insbesondere zumindest der Wasserablauf an der tiefsten Stelle eines nach unten geneigten Kammerbodens (37) der Dampferzeugungskammer angeordnet ist.

7. Dampferzeuger nach einem der vorhergehenden Ansprüche, wobei der Zyklonabscheider (40) aus Kunststoff besteht, wobei er vorzugsweise einteilig ist, insbesondere aus mindestens zwei Teilen zusammengesetzt ist, die unlösbar miteinander verbunden sind.

8. Dampferzeuger nach einem der vorhergehenden Ansprüche, wobei der Dampfauslass (49) aus dem Zyklonabscheider (40) zentral angeordnet ist und nach oben verlaufend ausgebildet ist, insbesondere entlang einer Mittellängsachse des Zyklonabscheiders (40) und/oder des Dampferzeugungsmittels (33).

9. Dampferzeuger nach einem der vorhergehenden Ansprüche, wobei eine Höhe der Kanalvertiefung (52) mehr als das Doppelte der Höhe des Zyklonkanals im radial äußeren Bereich beträgt und/oder die Kanalvertiefung einen Abscheidebereich bildet.

10. Dampferzeuger nach einem der vorhergehenden Ansprüche, wobei der Dampfauslass (49) zentrisch zu einer Mitte der Kanalvertiefung (52) angeordnet ist, wobei vorzugsweise der Dampfauslass (49) ein nach unten ragendes Dampfauslassrohr (50) aufweist, dessen untere Rohröffnung (55) im Bereich der Kanalvertiefung (52) und unterhalb der Ebene des Zyklonbodens (44) im radial äußeren Bereich des Zyklonkanals (43) verläuft.

11. Dampferzeuger nach Anspruch 9 oder 10, wobei von der tiefsten Stelle der Kanalvertiefung (52) der Wasserauslass (55) nach unten abgeht, insbesondere zentrisch zur Mittelachse der Vertiefung bzw. des Zyklonabscheiders (40), wobei insbesondere der Wasserauslass (55) unterhalb einer Ebene endet, in der eine Oberkante der Beheizung (36) der Dampferzeugungsmittel (33) liegt.

12. Dampferzeuger nach einem der vorhergehenden Ansprüche, wobei in dem Zyklonabscheider zwei separate und beabstandete Wasserdampfeinlässe vorgesehen sind zum Einleiten von Wasserdampf von den Dampferzeugungsmitteln in den Zyklonkanal, wobei vorzugsweise die beiden Wasserdampfeinlässe bezüglich einer Mittelachse des Zyklonabscheiders einander gegenüberliegend angeordnet sind.

13. Dampfgargerät (11) mit einem Dampferzeuger (30) nach einem der vorhergehenden Ansprüche, wobei ein Wasserzulauf (38) in die Dampferzeugungsmittel (33) vorgesehen ist und Dampf vom Dampfauslass (49) des Zyklonabscheiders (40) in einen Garraum (14) des Dampfgargeräts (11) geführt ist.

14. Verfahren zur Dampferzeugung mittels eines Dampferzeugers (30) in einem Dampfgargerät (11) nach Anspruch 13 zum Betrieb des Dampfgargeräts, mit den Schritten:
- Erhitzen von Wasser zur Erzeugung von Wasserdampf,
- Überführen des Wasserdampfes direkt oberhalb des erhitzen Wassers in einen Zyklonabscheider (40),
- Abscheiden von Wasser aus dem Wasserdampf innerhalb des Zyklonabscheiders (40) durch umlaufendes und spiralig nach innen verjüngendes Führen des Wasserdampfes,
- Zurückführen des abgeschiedenen Wassers in die Dampferzeugungsmittel (33) und
- Auslassen des Dampfes aus dem Zyklonabscheider (40) in einen Garraum (14) des Dampfgargeräts (11).

## Claims

1. Steam generator (30) for a steam cooker (11), wherein the steam cooker (11) has a cooking chamber (14), and wherein the steam generator (30) has:
- steam generating means (33),
- a water supply line (21) to the steam generating means (33),
- a cyclone separator (40) for steam generated by the steam generating means,
- a steam outlet (49) from the cyclone separator (40) to the cooking chamber (14) of the steam cooker (11),
wherein the cyclone separator (40) has:
- at least one steam inlet (46) for introducing steam from the steam generating means (33) arranged underneath it upwards into the cyclone duct (43) or into the cyclone separator (40),
- the steam outlet (49) at the end area of the cyclone duct (43),
- the water outlet (55) from the cyclone separator (40) or from the cyclone duct (43) for discharging separated water downwards into the steam generating chamber of the steam generating means (33),
**characterized in that** the cyclone separator (40) has:
- a cyclone duct (43) extending in at least some sections in a curve for separating steam into vapor on the one hand and into water on the other,
wherein
- the cyclone separator (40) with the steam generating means (33) forms an integrated structural unit with a direct entry of steam from the steam generating means into the cyclone separator,
- the cyclone duct (43) has a cross-sectional constriction at an initial area close to the steam inlet (46),
- the cyclone duct (43) has a cyclone floor (44),
- the cyclone floor extends in a radially outer area of the cyclone duct (43) in one plane,
- a cyclone side wall narrows spirally,
- a deepened duct section (52) reaching underneath the plane of the cyclone floor (44) in the radially outer area of the cyclone duct (43) is provided in a radially inner area of the cyclone separator (40).

2. Steam generator according to claim 1, wherein a direct outlet (55), preferably an outlet (55) in the form of a short pipe, is provided for separated water from the cyclone separator (40) into the steam generating means (33).

3. Steam generator according to claim 1 or 2, wherein the cyclone separator (40) is placed onto the steam generating means (33), the cyclone separator preferably being arranged directly above the steam generating means in the vertical direction.

4. Steam generator according to any of the preceding claims, wherein the steam generating means (33) and the cyclone separator (40) forming a structural unit have a common outer housing, wherein the outer housing is preferably split into at least two parts, in particular into at least an upper housing part (41) and a lower housing part (34), and wherein the lower housing part (34) preferably contains the steam generating means (33) and the upper housing part (41) contains the cyclone separator (40).

5. Steam generator according to any of the preceding claims, wherein the steam generating means (33) has a pipe-like housing (34) forming a steam generating chamber, preferably with a vertical central longitudinal axis, wherein the steam generating chamber has in particular an external heater (36), and wherein the pipe-like housing (34) of the steam generating means (33) is preferably a lower housing part (34) of the common outer housing according to claim 4.

6. Steam generator according to claim 5, wherein a water inflow (38) and a water outflow are provided in the chamber floor of the steam generating chamber, preferably jointly with a single opening, wherein in particular at least the water outlet is arranged at the lowest point of a downward-angled chamber floor (37) of the steam generating chamber.

7. Steam generator according to any of the preceding claims, wherein the cyclone separator (40) consists of plastic, and wherein it is preferably single-part, in particular put together from at least two parts that are undetachably connected to one another.

8. Steam generator according to any of the preceding claims, wherein the steam outlet (49) out of the cyclone separator (40) is centrally arranged and is designed extending upwards, in particular along a central longitudinal axis of the cyclone separator (40) and/or of the steam generating means (33).

9. Steam generator according to any of the preceding claims, wherein a height of the deepened duct section (52) is more than double the height of the cyclone duct in the radially outer area, and/or the deepened duct section forms a separation area.

10. Steam generator according to any of the preceding claims, wherein the steam outlet (49) is arranged centrically to a centre of the deepened duct section (52), and wherein the steam outlet (49) preferably has a downward-projecting steam outlet pipe (50) whose lower pipe opening (55) is in the area of the deepened duct section (52) and underneath the plane of the cyclone floor (44) in the radially outer area of the cyclone duct (43).

11. Steam generator according to claim 9 or 10, wherein the water outlet (55) extends downwards from the lowest point of the deepened duct section (52), in particular centrically to the central axis of the deepened section or of the cyclone separator (40), and wherein in particular the water outlet (55) ends underneath a plane in which lies a top edge of the heater (36) of the steam generating means (33).

12. Steam generator according to any of the preceding claims, wherein two separate steam inlets are provided at a distance from one another in the cyclone separator for introducing steam from the steam generating means into the cyclone duct, and wherein the two steam inlets are preferably arranged opposite one another in relation to a central axis of the cyclone separator.

13. Steam cooker (11) with a steam generator (30) according to any of the preceding claims, wherein a water inflow (38) into the steam generating means (33) is provided and steam is routed from the steam outlet (49) of the cyclone separator (40) into a cooking chamber (14) of the steam cooker (11).

14. Method for steam generation by means of a steam generator (30) in a steam cooker (11) according to claim 13 for operating the steam cooker, with the steps:
- Heating of water for generating steam,
- Transfer of the steam directly above the heated water into a cyclone separator (40),
- Separation of water from the steam inside the cyclone separator (40) by circular and spirally inward-tapering routing of the steam,
- Return of the separated water into the steam generating means (33) and
- Discharge of steam from the cyclone separator (40) into a cooking chamber (14) of the steam cooker (11).

## Revendications

1. Générateur de vapeur (30) pour un appareil de cuisson à vapeur (11), sachant que l'appareil de cuisson à vapeur (11) présente une chambre de cuisson (14), sachant que le générateur de vapeur (30) présente :
- des moyens de génération de vapeur (33),
- une alimentation en eau (21) des moyens de génération de vapeur (33),
- un séparateur à cyclone (40) pour la vapeur générée par les moyens de génération de vapeur (33),
- une sortie de vapeur (49) partant du séparateur à cyclone (40) jusqu'à la chambre de cuisson (14) de l'appareil de cuisson à vapeur (11),
sachant que le séparateur à cyclone (40) présente :
- au moins une entrée de vapeur d'eau (46) pour introduire la vapeur d'eau provenant des moyens de génération de vapeur (33) située en dessous vers le haut dans le canal de cyclone (43) ou dans le séparateur à cyclone (40),
- la sortie de vapeur (49) au niveau de la zone finale du canal de cyclone (43),
- la sortie d'eau (55) du séparateur à cyclone (40) ou du canal de cyclone (43) pour évacuer l'eau séparée vers le bas dans la chambre de génération de vapeur des moyens de génération de vapeur (33),
**caractérisé en ce que** le séparateur à cyclone (40) présente :
- un canal de cyclone (43) s'étendant au moins partiellement en forme d'arc pour séparer la vapeur d'eau d'une part en vapeur et d'autre part en eau,
sachant que :
- le séparateur à cyclone (40) forme avec les moyens de génération de vapeur (33) une unité de construction intégrée avec une entrée directe de la vapeur dans le séparateur à cyclone,
- le canal de cyclone (43) présente une réduction de la section transversale dans une zone initiale se trouvant à proximité de l'entrée de vapeur d'eau (46),
- le canal de cyclone (43) présente un fond de cyclone (44),
- sur un plan, le fond de cyclone s'étend dans une zone radialement extérieure du canal de cyclone (43),
- une paroi latérale du cyclone se rétrécit en spirale,
- dans une zone radialement intérieure du séparateur à cyclone (40), il est prévu un renfoncement de canal (52) qui s'étend au-dessous du plan du fond de cyclone (44) dans la zone radialement extérieure du canal de cyclone (43).

2. Générateur de vapeur selon la revendication 1, sachant qu'une sortie directe (55) de l'eau séparée provenant du séparateur à cyclone (40) est prévue dans les moyens de génération de vapeur (33), de préférence une sortie (55) sous forme de tuyau court.

3. Générateur de vapeur selon la revendication 1 ou 2, sachant que le séparateur à cyclone (40) est placé sur les moyens de génération de vapeur (33), sachant que le séparateur à cyclone est disposé de préférence directement au-dessus des moyens de génération de vapeur dans le sens vertical.

4. Générateur de vapeur selon l'une des revendications précédentes, sachant que les moyens de génération de vapeur (33) et le séparateur à cyclone (40) présentent sous forme d'une unité de construction un boîtier extérieur commun, ledit boîtier extérieur étant de préférence divisé en au moins deux parties, en particulier en au moins une partie de boîtier supérieure (41) et une partie de boîtier inférieure (34), sachant que de préférence la partie de boîtier inférieure (34) contient les moyens de génération de vapeur (33) et que la partie de boîtier supérieure (41) contient le séparateur à cyclone (40).

5. Générateur de vapeur selon l'une des revendications précédentes, sachant que les moyens de génération de vapeur (33) présentent un boîtier de forme tubulaire (34) qui forme une chambre de génération de vapeur, de préférence avec un axe central longitudinal vertical, sachant que la chambre de génération de vapeur en particulier présente un chauffage extérieur (36) et que, de préférence, le boîtier tubulaire (34) des moyens de génération de vapeur (33) est une partie inférieure (34) du boîtier extérieur commun conformément à la revendication 4.

6. Générateur de vapeur selon la revendication 5, sachant qu'une arrivée d'eau (38) et une évacuation d'eau sont prévues dans le fond de la chambre de génération de vapeur, de préférence en ayant en commun une seule ouverture, sachant qu'en particulier au moins l'évacuation d'eau est disposé à l'endroit le plus bas d'un fond de chambre incliné vers le bas (37) de la chambre de génération de vapeur.

7. Générateur de vapeur selon l'une des revendications précédentes, sachant que le séparateur à cyclone (40) est en matière plastique, sachant que de préférence il est monobloc, en particulier composé d'au moins deux parties assemblées entre elles de manière indissociable.

8. Générateur de vapeur selon l'une des revendications précédentes, sachant que la sortie de vapeur (49) du séparateur à cyclone (40) est disposée au centre et s'étend vers le haut, en particulier le long d'un axe longitudinal central du séparateur à cyclone (40) et/ou des moyens de génération de vapeur (33).

9. Générateur de vapeur selon l'une des revendications précédentes, sachant qu'une hauteur du renfoncement de canal (52) fait plus du double de la hauteur du canal de cyclone dans la zone radialement extérieure et/ou le renfoncement de canal forme une zone de séparation.

10. Générateur de vapeur selon l'une des revendications précédentes, sachant que la sortie de vapeur (49) est centrée au milieu du renfoncement de canal (52), sachant que de préférence la sortie de vapeur (49) présente un tuyau de sortie de vapeur (50) s'étendant vers le bas, dont l'ouverture inférieure du tuyau (55), s'étend dans la zone de renfoncement de canal (52) et en dessous du plan du fond de cyclone (44) dans la zone radialement extérieure du canal de cyclone (43).

11. Générateur de vapeur selon la revendication 9 ou 10, sachant que la sortie d'eau (55) s'étend vers le bas à partir du point le plus bas du renfoncement de canal (52), en particulier en étant centrée par rapport à l'axe central du renfoncement ou du séparateur à cyclone (40), sachant que la sortie d'eau (55) se termine en particulier en dessous d'un plan dans lequel se trouve un bord supérieur du chauffage (36) des moyens de génération de vapeur (33).

12. Générateur de vapeur selon l'une des revendications précédentes, sachant que deux entrées de vapeur d'eau séparées et espacées sont prévues dans le séparateur à cyclone pour introduire de la vapeur d'eau provenant des moyens de génération de vapeur dans le canal de cyclone, sachant que de préférence, les deux entrées de vapeur d'eau sont disposées opposées l'une à l'autre par rapport à un axe central du séparateur à cyclone.

13. Appareil de cuisson à vapeur (11) avec un générateur de vapeur (30) selon l'une des revendications précédentes, sachant qu'une arrivée d'eau (38) est prévue dans les moyens de génération de vapeur (33) et que de la vapeur est amenée de la sortie de vapeur (49) du séparateur à cyclone (40) dans une chambre de cuisson (14) de l'appareil de cuisson à vapeur (11).

14. Procédé de génération de vapeur à l'aide d'un générateur de vapeur (30) dans un appareil de cuisson à vapeur (11) selon la revendication 13 pour le fonctionnement de l'appareil de cuisson à vapeur, comprenant les étapes suivantes :
- réchauffement de l'eau pour générer de la vapeur d'eau,
- transfert de la vapeur d'eau directement au-dessus de l'eau chauffée dans un séparateur à cyclone (40),
- séparation de l'eau de la vapeur d'eau à l'intérieur du séparateur à cyclone (40) en faisant circuler la vapeur d'eau et en la faisant se rétrécir en spirale vers l'intérieur,
- recyclage de l'eau séparée dans les moyens de génération de vapeur (33) et
- évacuation depuis la vapeur du séparateur à cyclone (40) dans une chambre de cuisson (14) de l'appareil de cuisson à vapeur (11).
